Europäisches Patentamt

(19) European Patent Office

Office européen des brevets

(11) Publication number: **0 266 312**
**A1**

(12) # EUROPEAN PATENT APPLICATION

(21) Application number: **87810618.6**

(22) Date of filing: **27.10.87**

(51) Int. Cl.4: **C 25 C 7/02**
**C 25 C 7/00**

(30) Priority: **27.10.86 EP 86114895**

(43) Date of publication of application:
**04.05.88 Bulletin 88/18**

(84) Designated Contracting States:
**AT BE CH DE ES FR GB GR IT LI LU NL SE**

(71) Applicant: **ELTECH SYSTEMS CORPORATION**
**Corporate Headquaters 6100 Glades Road/Suite 305**
**Boca Raton Florida 33434 (US)**

(72) Inventor: **Wiaux, Jean-Pol**
**239, route Annecy**
**CH-1257 Croix de Rozon (CH)**

**Chevigné, Michel**
**1, rue Massenet**
**F-74100 Annemasse (FR)**

**Pellet, Yves**
**Champs Corboz**
**F-01210 Prevessin-Möens (FR)**

**Hinden, Jean**
**40 Chemin de la Fontaine**
**CH-1292 Chambésy (CH)**

(74) Representative: **Cronin, Brian Harold John et al**
**c/o DST SA 9, Route de Troinex**
**CH-1227 Carouge/GE (CH)**

(54) **Reticulate electrode and cell for recovery of metals from waste water.**

(57) Disclosed is a cathode assembly for recovery of metals from waste waters comprising a reticulated metal foam (6) and a current collecting lead (13). The electrical connection between the current collecting lead (13) and the reticulated metal foam (6) is provided through a conductive metal mesh (12). The current collecting lead is welded or soldered to the conductive metal mesh which is then pressed onto at least a portion of the reticulated metal foam, the conductive mesh being U-shaped so that when pressed onto the foam holds on both surfaces of the reticulated metal. The conductive mesh may be made of copper or nickel. Also disclosed is a flow through electrolytic cell for recovery of metals from waste waters using the cathode assembly.

Fig. 1

EP 0 266 312 A1

**Description**

## RETICULATE ELECTRODE AND CELL FOR RECOVERY OF METALS FROM WASTE WATERS

Technical Field

This invention relates to flow through electrolytic cells for recovery of metals from waste waters by electrowinning and reticulate electrodes for such cells. Specifically the invention relates to apparatus for the electrolytic recovery of metals onto reticulate type electrodes from solutions containing metal ions.

Background of the Invention

There is considerable and growing concern over pollution of waterways with various contaminants, such as copper, nickel, zinc, silver, gold, mercury and cadmium or nonmetallic contaminants such as cyanide, as well as complexes of the foregoing metals with cyanide. Many of these metals enter waterways from industrial sources, such as metal-finishing or plating shops or from mines. Environmental legislation and regulations in many countries sets maximum tolerable concentrations of these contaminants in the waste waters which may be discharged into public waterways.

It is well know that many metals can be recovered from solutions containing ions of the metals using electrolytic techniques. Generally, the solution containing the metal ions is passed through an electrolytic cell and the metal contained is plated out onto a cathode while water or cyanide ions are decomposed on the anode. Here, like in any other electrolytic process traditional concerns of cell efficiency and space time yield or productivity are of a particular importance. In case of metal deposition, further concern is recapture of the metals from the cathode at a relatively low cost and with relative ease.

Traditionally, the metal recovery cathode was comprised of a substrate made from an electrically conductive sheet of metal upon which the metal ions were plated out of a solution. Separation normally entailed melting the electrodeposited metal and the substrate, and subsequently separating the two metals. Where the substrate metal and the electrodepositing metal were the same, often these problems associated with subsequent separation of the cathode substrate and recovered metals were eased. The surface area of these traditional cathodes often limited their capacity for holding recovered metal.

More recently it has been found that openly porous plastics, particularly polymers, have found use as reticulate electrodes in metal ion recovery. In using these polymers it has been found essential that these plastics be both conductive and effectively rigid when placed in the electrolytic cell. Without conductivity, electrolytic recovery can become difficult. Without rigidity, maintenance of an effectively low anode cathode spacing within the electrolytic cell can become more complicated.

Various systems have been proposed or are reported to be available for use in the removal of metals and/or destruction of cyanide. One device for removing heavy metals from waste water is disclosed in EP-A-0 010 562. This document describes a process for electrochemical oxidation or reduction of species present in an electrolyte solution wherein the electrolyte is circulated through an individual cell. The undivided cell disclosed comprises a plurality of anodes and a plurality of cathodes mounted in a mutually-spaced arrangement in a nonconductive cell box. The box has a waste water inlet and a water outlet for passing waste water through the electrodes. The anodes and the cathodes have connectors for connection to respective bus bars and to a source of electrical energy. The electrode disclosed may be in the form of plates, tubes fibers or lamellar in structure. The preferred embodiment describes use of electrodes in the form of a slurry.

EP-A-0 031 267 discloses a porous carbon or graphite felt electrode whose surface is impregnated with a surface active agent and a process of treating of waste water using the electrode. The application deals almost exclusively with impregnation of the surface of carbon or graphite porous felt.

Journal of Applied Electrochemistry 8 (1978) pages 195 to 205 comprises an article entitled "CHARACTERIZATION OF RETICULATE THREE-DIMENSIONAL ELECTRODE" by A. Tentorio et al. which describes the preparation and use of a reticulated electrode. The electrode is prepared by depositing copper, first electrolessly and then electrolytically, on a polyurethane foam substrate. The electrode is installed in a membrane cell. The cell has two counter electrodes a counter-electrode of copper and another of lead/lead dioxide. It is stated that the cell could only be used for waste water treatment with multiple-pass electrolysis and that the concentration of pollutants after treatment should not be below tens of parts per million, in order not to weigh down excessively the recycle.

EP-A-0 071 443 discloses an improved flow through electrolytic cell for treating waste water by subjecting it to electrolytic action comprises a membrane-free and diaphragm-free electrolytic cell having a plurality of anodes and a plurality of cathodes mounted in a mutually-spaced arrangement in a nonconductive cell box. The box has a waste water inlet and an outlet port as well as a flow distributor which provides a uniform electrolyte flow through the cell. The anodes and cathodes are movable on a flange and each having a terminal connector to the respective bus bars located on the cell box below the flange. Each anode has openings through which the waste water can flow and each cathode is a reticulated structure having a metallized open-cell organic polymer foam as a substrate.

Most electrolytic cells for treatment of waste waters proposed so far have suffered various disadvantages such as poor energy efficiency, cumbersome and laborious maintenance. rapid deterioration of the constructional parts and due to the environment in which these cells usually operate serious corrosion problems. Thus, there is a clear need for an economical and yet effective device for treating waste waters, a device which will permit removal of substantial amounts of contaminants, such as copper, zinc and cadmium, alone or in combination with cyanide, from plating plant rinse waters. The cell disclosed in EP 0 071 443 has offered acceptable solutions to various problems mentioned. However, todays economy dictates more stringent requirements, thus creating a need for even better and more reliable waste water treatment systems.

Disclosure of the Invention

Improvements aiming to avoid the problem of electrical connection to the reticulate cathode have included expedient of using "crocodile" clips which are simply clipped onto the reticulate cathodes and the anodes after they have been slid into place. Electrical connection was provided using flexible wires. While particularly obviating the drawbacks, this arrangement is labour intensive and errors in connecting the cathodes and anodes can occur.

It is an object of the present invention to provide an improved electrochemical cell with one or more reticulate cathodes for use in recovering metal from a solution containing the metal ions. More particularly, the object of the invention is to provide an electrolytic waste water treatment device which enables the removal of metal from plating rinse water with or without recycling. The device should be simple to install, have more reliable construction and operate for prolonged periods of time Partially or completely unattended requiring no laborious maintenance and frequent servicing.

It is a further object of the invention to provide a readily replaceable reticulate cathode member which has a good electrical conductivity and rigidity between the reticulated body of the cathode and its current collector lead. In other words, the object is to provide a reticulate cathode member with a uniform current distribution and a relatively low ohmic resistance over the entire geometrical surface area of the electrode.

It is a still further object of the invention to provide a cathode configuration or assembly including a separable electrical current distributor and rigidity imparting member with the reticulated cathode member.

In one aspect the present invention therefore provides a cathode assembly and cell for electrodeposition of metals from solutions containing metal ions. The assembly comprises an outwardly extending electrical current connecting portion and electrically conductive reticulated structure. The feature of the assembly is that the metal deposition surface is an openly porous reticulated metal foam attached to at least one current collector.

The invention also provides a method for making the cathode assembly for use in electrodeposition of metals from solutions containing the metal ions.

These cathode assemblies are utilized to form anode-cathode pairs contained in an electrolytic metal recovery cell. Generally a plurality of the cathode assemblies are arranged along the length of an electrolytic cell; metal ion containing solution being introduced at one end of the cell, and traversing a cell length by passing successively through the several cathode assemblies, including the openly porous reticulated metal foam. Thus the electrolytic cell for electrodeposition of metals from solutions according to the invention has a series of reticulated cathode assemblies and alternating parallel anodes arranged in line in the cell, the cathodes comprising openly porous reticulated metal foam attached to and in an electrical contact with at least one current collector.

Use of the openly porous polymeric cathode provides a relatively low cost cathode assembly having a substantial available surface for electrodeposition of metal ions from the solution. The electrically conducting portion provides a good electrical contact and a relatively rigid cathode assisting in the maintenance of anode-cathode spacing within the cell and assisting in maintaining desirably low electrical power consumption in operation of the electrolytic cell.

The cathode assemblies of the instant invention are readily assembled by pressing a piece of conductive mesh e.g. nickel or copper onto a sheet of reticulated metal covering at least a part of its periphery. Prior to pressing, the conductive metal mesh is cut to size and U-shaped so that when pressed holds onto both surfaces of the electrode without changing substantially the thickness of the reticulated portion of the cathode assembly. Typically, after cutting the metal mesh is cleaned and then a current collector is spot welded onto its surface. Once assembled, the unitized construction allows ready changeout as the openly porous structure becomes plugged with accumulating metal deposits. In one preferred embodiment, the cathode assembly extends above the normal level of solution within the electrolytic cell. When pluggage of the reticulated metal of the cathode occurs metal laden solution flowing through the cell overflows the plugged cathode and passes above the normal or usual metal laden solution level within the cell, providing a visual indication of cathode pluggage.

Alternatively, the cathode assemblies may be produced by forcing one end of the current collecting lead into the reticulated foam and electoplating the structure until mechanically and electrically good connection between the foam and the lead is obtained. After plating part of the cathode assembly containing the current collecting lead may further be pressed to secure rigidity of the plated connection. It may also be possible to place the current collecting lead onto the outside surface of the reticulated foam and then form the electical contact by electroplating.

The above and other features and advantage of the invention will become more apparent from the detailed description of the invention which follows considered in conjunction with the accompanying drawings which together form a part of the specification.

## Description of the Drawings

Figure 1 is a perspective view of a cell with cathode assembly made in accordance with the invention. Figure 1a is a magnified view of part of the cathode assembly and Figure 1b gives a detailed view of the anode contact to its bus bar.

Figure 2 is a cross sectional view of a variation of the cell anode connection and the bus bar of the invention.

Figure 3 is a cross sectional view of a cathode assembly made in accordance with a second embodiment of the assembly of the instant invention showing a reticulated cathode layer with its current collector and electrically conductive portion.

## Best Embodiment of the Invention

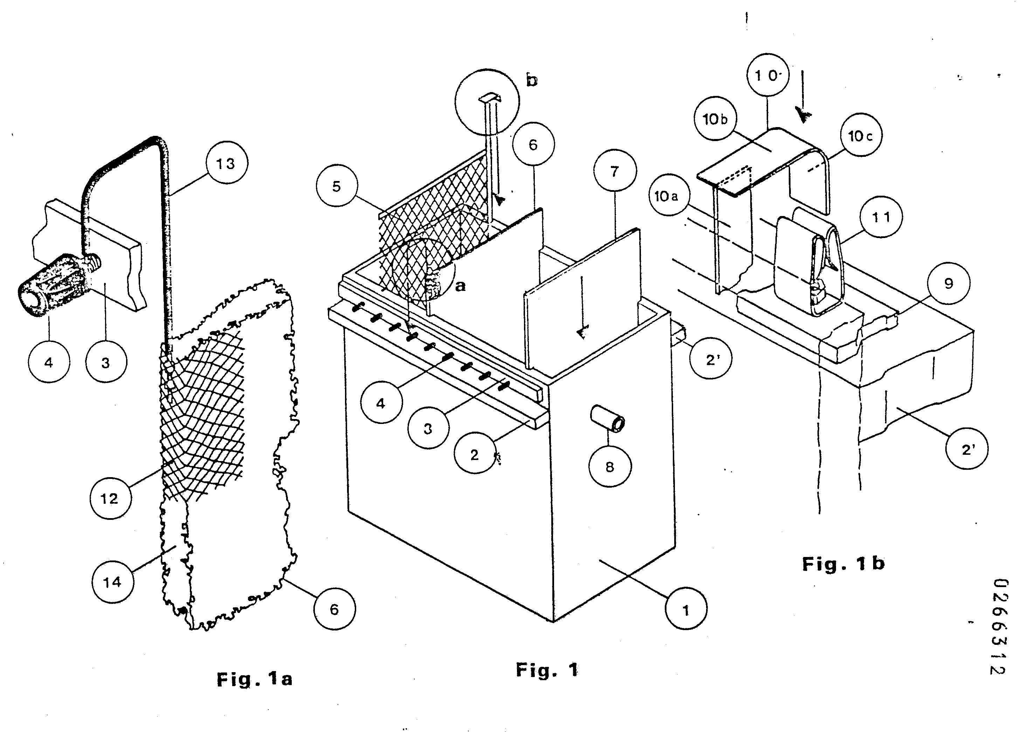

Referring to the drawings, Figure 1 shows the cell made of a plastic box 1 which comprises two extended portions or edges 2, 2′ on opposite sides. The box is equipped with a cathode bus bar 3 and an anode bus bar 9, a plurality of conductive mesh anodes 5 and reticulated cathode assemblies 6 as well as a flow distributor 7 and an inlet 8 and an outlet port (not shown). Anodes and cathodes have an open structure which allows the electrolyte to circulate through the electrodes from the inlet to the outlet of the cell. The cell outlet is lower than the inlet so as to avoid rise of the electrolyte in the cell to unacceptable levels. Anodes and cathodes are immersed in the electrolyte in such a way that any overflow caused by pluggage of the cathodes or anodes may easily be observed.

The cell operates at atmospheric pressure thus eliminating operating problems associated with pressurized cells and is made in such a way that any individual electrode can be removed or introduced without interruption of electrical power or electrolyte circulation. The cell may be operated in a batch or a continuous mode.

The cathode assembly 6 presented in Figure 1a consists of reticulated metal foam (a metallized polymeric foam) 14, conductive metal mesh 12 and an electrical current lead 13 which is welded or soldered to the mesh. The mesh 12 is pressed onto the reticulated metal to provide a good electrical contact between the current lead and the metal as well as to ensure the necessary mechanical rigidity and gripping to the foam. This is a difficult task since, on the one hand, too much pressure will change physical dimensions of the foam reducing its mechanical strength and, on the other hand, too little pressure will provide insufficient electrical contact. Preferably, reticulated cathodes made from nickel foam have the conductive mesh made from nickel and the copper cathodes have a mesh made from copper, however, any suitable conductive metal mesh may be used. As already mentioned, the mesh is designed so as to allow proper bonding between the current lead and the reticulated metal foam and thus it may be replaced with any other suitably designed conductor which will ensure intimate contact without affecting the mechanical stability of the reticulated metal and a good electrical contact (eg. perforated plate). Typical porosity of the reticulated foam is about 10 pores per cm., however, foams with a larger porosities such as 5 pores per cm may be employed for solutions with higher metal ion concentrations (eg. about 10-15 g/1). When the electrolyte content in heavy metal ions is very high (eg. more than 20 g/1), as opposed to reticulated foam, it is possible to use mesh cathodes of various sizes or even perforated plates.

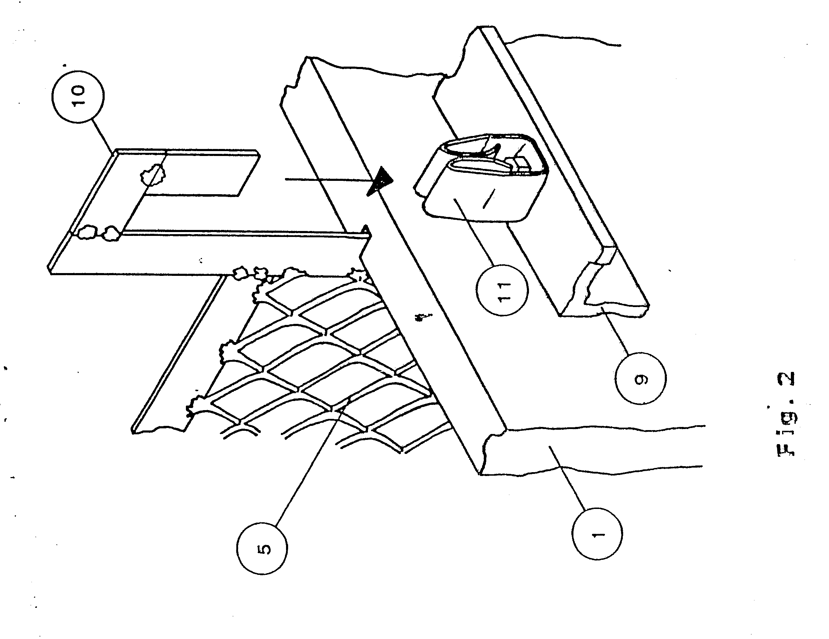

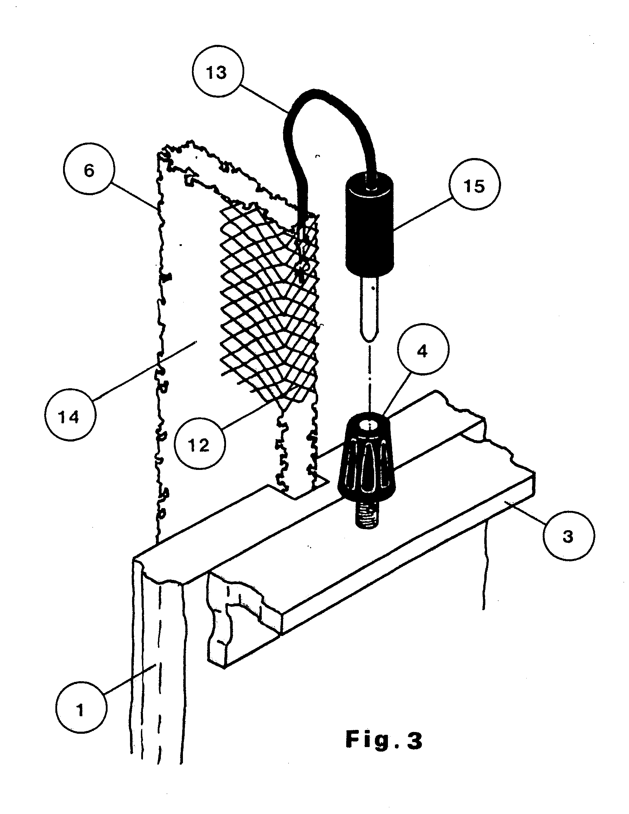

The electrical connection of the dimensionally stable anode arrangement is shown in the Figure 1b. The anode current collector 10 made from titanium is designed in such a way that when the anode is placed in the box the profiled end simply slides into the copper contact 11 mounted onto the anode bus bar. The anode bus bar is carried on the nonconductive extended portion 2′. Both bus bars may be mounted directly onto the box as shown in Figures 2 and 3. However, in such a case, L-shaped copper bus bars are fitted into slots provided on both sides of the cell box. When L-shaped copper bus bars are used the cathode assembly, as shown in Figure 3, may further include a contact 15 which will than be designed to fit into the bus bar connector 4 when the cathode is placed into the cell.

As mentioned above, the anodes are made by welding a titanium mesh to a frame made from titanium strips. The construction allows a uniform current distribution and provides a good electrical contact with the anode current lead and a rigid structure. This anode and cathode fixture system allows the cell to be operated with a cover while having all the electrical contacts outside the cell and free from corrosion problems.

As shown in Figure 1b, the anode current collectors 10 each include a flat portion 10a extending vertically from one side of the anode and disposed generally in the plane of the anode. At the top of portion 10a is welded on L-shaped piece 10b arranged so that its outer face 10a, which protrudes downwardly, outside the cell box, is parallel to the cell box side, i.e. perpendicular to the main place of the anode mesh. This outer face 10c conveniently slips in the contact 11 which has a spring slot dimensionned and oriented to receive the face 10c. This arrangement provides convenient filling of the anodes which can be positively pushed into place with instant electrical connection. Removal of the anodes is equally easy.

Optionally, the cell may include a cover. The cover may be designed such that electrolyte vapors from the cell are collected on the cover and upon condensation returned to the cell. A cover of flattened V-cross-section may be a suitable design. The cell layout with its bus work and electrical connections are made to accommodate for this option.

The cell may further include a porous flow distributor 7 made of sintered polyethylene with a porosity of about 100 pores per cm. The distributor is used to ensure uniform flow of the electrolyte through the electrodes and the cell. It also serves to prevent passage of any solids which may plug the porous electrodes. The porosity of the distributor is selected to provide a uniform flow and does not create a significant pressure drop at the operating flow rates.

A feature of the described cell is that the porous anodes and cathodes, of rectangular shape, are slidable into vertical grooves in the cell box, and are extended by rigid or substantially rigid elongated current lead-in members which extend upwardly from an edge of the anode or cathode and terminate with hook-like projections which project our and over the respective cell side for easy and quick connection with a contact member fitted on the respective anode or cathode bus bar. The anode and cathode bus bars are located on opposite sides of the cell. By making the anode and cathode leads of different shape (round for the cathode, as shown, and flat for the anode) with connectors of corresponding shape, any error in assembling and connecting the anodes and cathodes is avoided.

## Claims

1. A cathode assembly (6) for recovery of metals from waste waters comprising a reticulated metal foam (14) and a current collecting lead (13), characterized in that the electrical connection between the current collecting lead and the reticulated metal foam is provided via a conductive metal mesh.

2. The cathode assembly of claim 1, characterised in that the current collecting lead is welded or soldered to the conductive metal mesh.

3. The cathode assembly of claim 1 or 2, characterised in that the conductive mesh is pressed onto at least a portion of the reticulated metal foam, the conductive mesh being U-shaped so that when pressed onto the foam holds on both surfaces of the reticulated metal.

4. The cathode assembly of claim 1 or 2, characterised in that the conductive mesh is made of copper or nickel.

5. A flow through electrolytic cell (1) for recovery of metals from waste waters having a plurality of anodes (5) and a plurality of cathodes (6) mounted in a mutually-spaced relationship in a nonconductive cell box, the box having a waste water inlet (8) and a water outlet for passing waste water through the electrodes, the anodes and the cathodes being connected to respective anode and cathode bus bars (9, 3) and being movable in the box, each cathode comprising a reticulated structure having a metallized open-cell organic polymer foam as a substrate, wherein the cathodes comprise the cathode assemblies of claims 1-4.

6. The flow through cell of claim 5, wherein the cell box includes a extended portions (2, 2') which serve as support for at least one bus bar.

7. The flow through cell of claim 5, wherein the bus bars (3, 9) carrying connectors (4, 11) are L-shaped and are fitted into slots provided on both sides of the box.

0266312

Fig. 1b

Fig. 1

Fig. 1a

Fig. 2

**Fig. 3**

0266312

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 079 058  (DIAMOND SHAMROCK) <br> * Page 5, lines 32-35; page 6, lines 22-30 * | 1,3,5,6 | C 25 C   7/02 <br> C 25 C   7/00 |
| Y | EP-A-0 074 167  (DIAMOND SHAMROCK) <br> * Page 8, lines 10-17 * <br> ----- | 1,3,5,6 | |

TECHNICAL FIELDS SEARCHED (Int. Cl.4)

C 25 C   7

The present search report has been drawn up for all claims

| Place of search | Date of completion of the search | Examiner |
|---|---|---|
| THE HAGUE | 01-02-1988 | GROSEILLER PH.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................

& : member of the same patent family, corresponding document

EPO FORM 1503 03.82 (P0401)